Europäisches Patentamt

European Patent Office

Office européen des brevets

(11) Veröffentlichungsnummer: **0 198 238**
**A1**

## (12) EUROPÄISCHE PATENTANMELDUNG

(21) Anmeldenummer: 86103504.6

(22) Anmeldetag: 15.03.86

(51) Int. Cl.⁴: **G11B 15/32**

(30) Priorität: **13.04.85 DE 3513344**

(43) Veröffentlichungstag der Anmeldung:
**22.10.86 Patentblatt 86/43**

(84) Benannte Vertragsstaaten:
**DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Bratenstein, Ernst**
**Taubenweg 26**
**D-8510 Fürth(DE)**

(54) **Vorrichtung zum Antrieb der Wickelspulen in einem Magnetbandgerät.**

(57) Es wird eine Vorrichtung zum Antrieb der Wickelspulen (2,3) in einem Magnetbandgerät, insbesondere in einem Video-Magnetbandgerät beschrieben, die es ermöglicht, daß vorzugsweise während des schnellen Bandvor-und Bandrücklaufes eines Gerätes die beiden Wickelmotore (4,5) derart koppelbar sind, daß von beiden Motoren (4,5) gleichzeitig nur eine Wickelspule -Aufwickelspule -angetrieben wird.

FIG. 1

## VORRICHTUNG ZUM ANTRIEB DER WICKELSPULEN IN EINEM MAGNETBANDGERÄT

Die Erfindung betrifft eine Vorrichtung entsprechend dem Oberbegriff des Anspruchs 1.

Es sind Video-Magnetbandgeräte bekannt, die als Bandspeicher eine Cassette aufweisen und bei denen die Bandspulen über je einen zugeordneten Bandwickelmotor angetrieben werden. Weitere Antriebsmotore sind zum Antrieb einer Kopftrommel und einer Capstan-Welle vorgesehen. Da Video-Geräte dieser Art auch als tragbare Geräte eingesetzt werden, ist es wünschenswert, daß die Geräte ein geringeres Gewicht und möglichst kleine Abmessungen aufweisen. Erforderlich ist ferner, daß derartige Geräte über Bordbatterien zu betreiben sind, und daher die Stromaufnahme der Geräte begrenzt ist. Da die Bandwickelmotore für den größten Leistungsbedarf ausgelegt werden müssen, und dieser ergibt sich während des Schnellen Band-Umspulbetriebes, so sind gegenüber den Erfordernissen im normalen Gerätebetrieb (Aufnahme-Wiedergabebetrieb) die Wickelmotore überdimensioniert. Es ist somit erforderlich, daß für zwei nicht für eigentliche Gerätefunktion wünschenswerte Betriebsstellungen Antriebsmotore eingesetzt sind, die das Gerät zwangsläufig vergrößern und das Gewicht erhöhen.

Aufgabe der Erfindung ist est nun, diesen Nachteil zu beseitigen und einen Bandantrieb für Video-Magnetbandgeräte zu schaffen, bei dem die Band-Wickelmotore auch im schnellen Bandvor- und Bandrücklaufbetrieb die Wickelspulen nur mit dem geringeren Leistungsbedarf des normalen Aufnahme-Wiedergabebetriebes antreiben.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1 ist eine schematische Darstellung eines Getriebes mit Draufsicht zum wechselseitigen Antrieb einer Wickelspule bei Kopplung beider Wickel-Antriebsmotore, im Schnitt I -I und in Pfeilrichtung I,

Fig. 2 ist eine Seitenansicht der schematischen Getriebedarstellung nach Fig. 1 im Teilschnitt und in Pfeilrichtung II der Fig. 1.

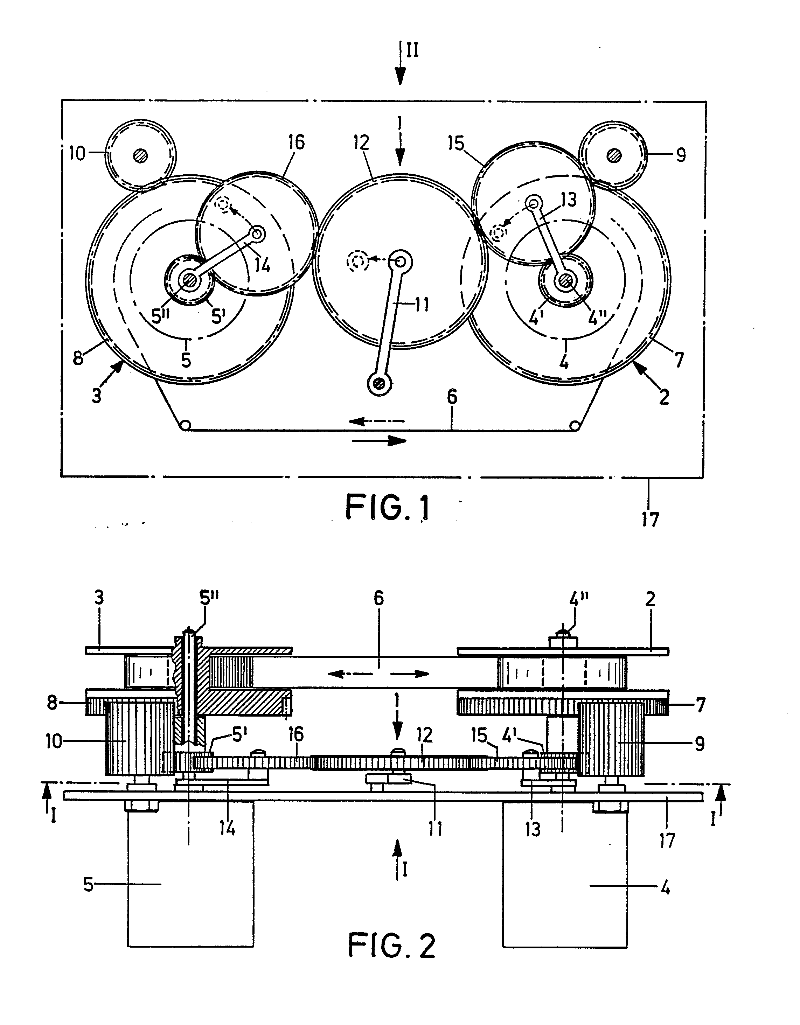

Fig. 1 zeigt eine schematische Ansicht eines Getriebes 1, das die beiden Wickelspulen eines Magnetband-Videogerätes wechselweise mittels beider Wickel-Antriebsmotore 4 und 5 antreibt. Zur Vereinfachung der Zeichnung sind lediglich die beiden Wickelspulen bzw. Wickelspulenträger und die das Getriebe darstellende Zahnräder gezeichnet. Die Wickelspulenträger, die zur Vereinfachung als Wickelspulen bezeichnet werden, sind frei drehbar über je eine Lagerbuchse auf der Welle der beiden Antriebsmotore gelagert und werden somit von diesen nicht direkt angetrieben. Das Magnetband 6 kann wechselweise von der Wickelspule 3 auf die Wickelspule 2 oder umgekehrt umgespult werden. Im normalen Gerätebetrieb wird das Magnetband vorzugsweise nur in einer Bandlaufrichtung bei sehr kleiner Bandgeschwindigkeit angetrieben. Demgegenüber soll jedoch der Umspulbetrieb in möglichst kurzer Zeit erfolgen. Der Antrieb zur Erfüllung dieser Forderung erfordert von seiten des jeweiligen Wickelmotors ein höheres Anlaufmoment als dies für den Normalbetrieb erforderlich ist. Erreicht wird die erforderliche unterschiedliche Motorleistung unter Zugrundelegung eines Motors,dessen Leistung nur für den Normalbetrieb angelegt ist, dadurch, daß über ein bedarfsweise sich automatisch aufschaltbares schwenkbares Getriebe 1 die beiden Antriebsmotore zum Antrieb von nur einer Wickelspule gekoppelt werden. Hierzu ist bei jedem Antriebsmotor 4, 5 ein Zahnrad 4', 5' fest auf der Welle 4", 5" der Antriebsmotore aufgezogen. Weiterhin ist auf der Motorwelle der beiden Antriebsmotore je eine Wickelspule 2, 3 drehbar gelagert. Die Wickelspulen, bzw. deren Träger, weisen einen Zahnkranz 7, 8 auf. Dieser Zahnkranz befindet sich somit jeweils über dem Zahnrad 4' und 5' des Antriebsmotors 4 und 5. Die zwei Getriebeebenen werden durch je ein dem Zahnkranz der Wickelspulen zugeordnetes Stufenrad 9 und 10 überbrückt. Das Stufenrad ist jedoch nicht direkt im Eingriff zum Zahnrad 4' oder 5' der Antriebsmotore. Zwischen den beiden Zahnrädern 4' und 5' befindet sich auf einem Hebel 11 ein Schwenkrad 12, das über zwei je auf einem Schwenkhebel 13 und 14 gelagerte Zwischenräder 15 und 16 eine getriebemäßige Verbindung zwischen den beiden Wickelspulenseiten herstellt.

Getrennt sind beide Antriebsmotore nur im Spielbetrieb in Funktion, sofern wie üblich ein Antriebsmotor die Wickelspule antreibt und der andere Antriebsmotor in gleicher oder gegenläufiger Drehrichtung gegenüber der Aufwickelspule ein bandzugabhängiges Bremsmoment ausübt. Während dieses Betriebszustandes liegen beide Zwischenräder 15 bzw. 16 am Stufenrad 9 bzw. 10 an und koppeln die Antriebsmotore 4 und 5 direkt über die zugeordneten Zahnräder 4' und 5' mit den Wickelspulen 2 und 3.

Nach der Fig. 1 wird das Magnetband 6 von der Wickelspule 3 auf die Wickelspule 2 in Pfeilrichtung umgespult. Die Wickelspule 3 hat hierbei keine getriebeseitige Verbindung mit dem Antriebsmotor 5. Der Antriebsmotor 5 ist über das Zwischenrad 16 mit dem Schwenkrad 12 in Eingriff,und dieses verbindet über das weitere Zwischenrad 15 und das Stufenrad 9 die Wickelspule 2 mit dem Antriebsmotor 5 der Bandabwickelseite. Da das Zwischenrad 15 hierbei gleichzeitig in Eingriff mit dem Zahnrad 4' des Antriebsmotors 4 steht, sind beide Antriebsmotore 4 und 5 zum Antrieb der Aufwickelspule 2 bei gleicher Drehzahl zusammengeschaltet. Die Umschaltung erfolgt in umgekehrter Richtung drehrichtungsabhängig.

Aus der Fig. 2 ist die unterschiedliche Getriebeebene zwischen der eigentlichen Getriebe-Antriebsebene und den Wickelspulen zu erkennen. Der Schwenkhebel 11 ist auf einem Gerätechassis 17 gelagert. Die Schwenkhebel 13 und 14 sind auf der Motorwelle 4" und 5" des jeweils zugeordneten Antriebsmotors frei drehbar gelagert. Das Getriebe 1 kann natürlich auch in Abänderung der Darstellung derart aufgebaut sein, daß durch getrennte Lagerung der Wickelspulen und einer seitlichen Anordnung der Antriebsmotore die Getrieberäder nur in einer Ebene angeordnet sind.

## Ansprüche

1. Vorrichtung zum Antrieb der Wickelspulen in einem Magnetbändgerät, insbesondere in einem Video-Magnetbandgerät, bei dem das Magnetband von zwei getrennt, vorzugsweise nebeneinander angeordneten Wickelspulen ab-und aufgewickelt wird, und beide Wickelspulen getrennt über einen zugeordneten Antriebsmotor antreibbar sind, **Dadurch gekennzeichnet,** daß zwischen beiden Antriebsmotoren (4, 5) für die Bandwickelspulen (2, 3) ein Getriebe (1) derart angeordnet ist, daß bedarfsweise beide Antriebsmotore (4, 5) zum Antrieb von nur einer Wickelspule (2 oder 3) koppelbar sind.

2. Vorrichtung nach Anspruch 1, **dadurch gekennzeichnet,** daß das Getriebe (1) als Zahnrad-Schwenkgetriebe ausgebildet ist und drehrichtungsabhängig selbständig von einer Wickelspulenseite auf die andere umschaltbar ist.

3. Vorrichtung nach Anspruch 1 oder 2, **dadurch gekennzeichnet,** daß das Getriebe (1) nur in den Geräte-Betriebsfunktionen schneller Bandvor-und Bandrücklauf in seine wechselseitige Betriebstellung selbständig oder durch Steuermittel einrückbar ist.

FIG.1

FIG. 2

## EINSCHLÄGIGE DOKUMENTE

EP 86103504.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 3 850 386 (ZIMMERMANN)<br>* Fig. 2,3; Zusammenfassung *<br>-- | 1 | G 11 B 15/32 |
| A | US - A - 4 407 463 (ASHIDA)<br>* Fig. 1; Zusammenfassung *<br>-- | 1 | |
| A | FR - A - 2 191 190 (IBM)<br>* Fig. 1; Ansprüche 1-7 *<br>-- | 1 | |
| A | DE - A1 - 3 003 551 (ZETTLER)<br>* Fig. 1-5; Ansprüche 1-7 *<br>---- | 1,2,3 | |

**RECHERCHIERTE SACHGEBIETE (Int. Cl.4)**

G 11 B 15/00

G 03 B 1/00

Der vorliegende Recherchenbericht wurde für alle Patentansprüche erstellt.

| Recherchenort | Abschlußdatum der Recherche | Prüfer |
|---|---|---|
| WIEN | 04-07-1986 | BERGER |